# EUROPEAN PATENT SPECIFICATION

(11) **EP 2 582 882 B1**
(45) Date of publication and mention of the grant of the patent: **22.02.2017**
(21) Application number: 10765425.3
(22) Date of filing: 08.10.2010
(51) Int. Cl.: E02B 17/00, E04H 12/10, E04H 12/14

(54) **JACKET STRUCTURE FOR OFFSHORE CONSTRUCTIONS**
MANTELSTRUKTUR FÜR OFFSHORE-KONSTRUKTIONEN
STRUCTURES DE TREILLIS POUR CONSTRUCTIONS OFFSHORE

(30) Priority: 23.06.2010 EP 10167043
(43) Date of publication of application: 24.04.2013
(73) Proprietor: Siemens Aktiengesellschaft, 80333 München (DE)
(72) Inventor: CHRISTIANSEN, Carsten, DK-6000 Kolding (DK)
(86) International application number: PCT/EP2010/065128
(87) International publication number: WO 2011/160703

(56) References cited:
- EP-A1- 2 508 677
- DE-A1-102007 020 483
- FR-A- 1 168 415
- US-A- 3 516 259
- US-A- 4 854 779

## Description

The invention relates to a jacket structure for offshore constructions, particularly a jacket structure for offshore wind turbines, having a number of axially extending first profiles and a number of second profiles extending in an angle relative to the first profiles, whereby at least one first and/or second profile ifs at least partially hollow, whereby the first and/or second profiles (2, 3) are provided with a connecting portion for connecting with at least one further first or second profile (2, 3), whereby the connecting portion is provided at respective free endings of the first and/or second profiles (2, 3).

Offshore constructions for diverse structures to be installed in the sea are usually necessary in particular for wind power plants, that is wind turbines and represent a constructive challenge as the respective structure has to be erected on the seabed by means of an appropriate foundation. Thereby, jacket structures are well-known foundations since they represent a constructively simple and feasible principle. Besides, jacket structures are comparatively cost-effective.

Yet, the mechanical stability of the jacket structures may represent a problem, in particular in long-term regards.

In order to account for the harsh conditions in the sea, the mechanical stability of the jacket structures is constructively counteracted by increasing the wall thicknesses of the respective profiles, that is particularly buckling sensitive areas of the jacket structure. Hence, strengthening of the jacket structure usually leads to an increased use of material resulting in an increase of costs.

Thus, the known principles of improving the mechanical stability of jacket structures for offshore constructions are considered as not satisfying.

FR 1168415 A discloses a jacket structure for an offshore construction, comprising a number of axially aligned profiles and a number of profiles extending in an angle relative to the axially aligned profiles. The respective profiles are partially hollow and filled with concrete or grout.

US 4854779 A discloses an offshore platform which is supported upon a plurality of jacket sections. Each jacket section connects a plurality of leg portions with struts and bracings. The jacket sections are joint at corresponding lower an upper receptacles by means of a mating pin being received within the receptacles of adjecently disposed leg portion. Grout may be inserted in an annular space extending between the mating pin and the inner wall of respective receptacles.

DE 102007020483 A1 discloses a support structure for an offshore wind turbine, comprising a pile which penetrates in the sea ground. The free ending of the pile is provided with a reduced outer diameter so that a transition piece may be disposed on top of the pile. An overlapping region between the pile and the transition piece is filled with concrete material. US 3516259 A discloses a supporting structure for an offshore construction. The supporting structure comprises axially extending columnar legs and bracing pipes extending in an angle relative to the columnar legs. An annular space provided within to columnar legs may be filled with concrete.

Hence, it is the object of the invention to provide a jacket structure for offshore constructions with improved mechanical properties.

This is achieved by a jacket structure for offshore constructions as described above, wherein the connecting portions are provided with flange-like portions (10), whereby the flange-like portions (10) comprise at least one bore for accommodating connecting means, particularly bolts (11).

The present invention provides a novel principle for increasing the mechanical stability of jacket structures by filling or grouting the hollow spaces particularly of the highly loaded profiles or portions of respective profiles with the cured material. In such a manner, the mechanical properties of the jacket structure or respective profiles may be improved, that is the jacket structure or respective profiles may be strengthened in a simple manner. Thereby, it is possible to reduce wall thickness in the respective filled portions of the jacket structure as the required mechanical properties are not only defined by the profiles themselves but additionally by means of the cured material inside the respective hollow spaces of the profiles contributing to an optimised design and material use of the jacket structure as a whole. This is advantageous particularly regarding the use of metals such as mainly steel for building the profiles since it also contributes to a comparatively cost-effective construction.

Likewise, eigen frequencies of the profiles are proactively adjustable or controllable by the defined filling of the respective hollow spaces with the cured material. Thereby, critical collisions of eigen frequencies of different components of the offshore construction are avoided, that is with regard to the exemplary case of a wind turbine the superposition of eigen frequencies or vibrations originating from the turbine blades and moving towards the jacket structure may be reduced.

Moreover, filling of the hollow spaces of the profiles with the cured material, which is advantageously not jeopardised by corrosive effects, leads to an improved corrosion resistance of the jacket structure or the respective filled profiles.

A profile may be provided with a hollow space extending along its entire length or merely parts of it, that is in sections. Accordingly, the profiles may be deemed as fully or partially hollow pieces having a core or internal portions filled with the cured material.

It is possible, that the entire jacket structure, that is every profile is at least partially or entirely filled with the cured material. Alternatively, only certain parts, that is especially buckling sensitive areas of the jacket structure such as comparatively long first and/or second profiles or joints of first and/or second profiles for instance are filled with the cured material. Hence, the inventive jacket structure may range from only a part of a first or second profile being filled with the cured material to the entire jacket structure, that is every profile being completely filled with the cured material.

Cured or curable material in terms of the present invention relates to all types of materials which may undergo or have undergone a physical and/or chemical transformation from a liquid or viscous state into a solid or cured state under defined conditions.

It is of advantage, that communicating hollow spaces of at least two adjacently disposed first and/or second profiles are filled with the cured material. This preferred embodiment provides another advantageous aspect of the invention since the cured material filled in the respective hollow spaces of the abutting profiles may also serve as a connecting means and/or increasing the stability of joints between adjacently disposed profiles as the cured material extends between the respective communicating hollow spaces of the respective profiles. Of course, the joints of more than two first or second profiles may be strengthened in the same manner if the communicating hollow spaces extend through more than two respective profiles.

Generally, the first or second profiles may be connected by means of bolted-joints, welded-joints, plug connections or the like. Yet, it is possible that the cured material may serve as the only connecting means for the respective aligned profiles, that is no other connecting means than the cured material may be necessary in certain cases.

The connecting portions of the first profiles with the respective second profiles, that is in particular node portions of the jacket structure, are highly exposed to buckling. Hence, it is advisable, when the first profiles are filled with the cured material in respective connecting portions with second profiles. In such a manner, these comparatively highly loaded, buckling sensitive portions may be mechanically strengthened.

The first and/or second profiles are provided with a connecting portion for connecting with at least one further first or second profile. The connecting portions support a quick and secure attachment or alignment of abutting first or second profiles and therefore, are of advantage in regard to the erection or assembly of the entire jacket structure.

Thereby, the connecting portions are provided at respective free endings of the first and/or second profiles. Yet, other locations with respect to the respective outer and/or inner diameter of the profiles are thinkable as well. The connecting portions of the first and/or second profiles may build a plug-connection in such a manner that the respective connecting portions at least partially overlap. Plug-connections represent a simple connecting principle, whereby a connection of two abutting profiles is achieved by one profile engaging the other, thereby building an overlapping region. In dependence of the length of the overlap a plug-connection may offer a certain mechanical stability as well.

Thereby, an annular space may be provided by the respective connecting portions in the region of the overlap, whereby the annular space is filled with the cured material. In such a manner, the cured material serves to strengthen the mechanical stability of the plug-connection since it bonds the respective connected profiles together, that is the respective connecting portions of the profiles stick firmly to each other by means of the cured material. In order to increase the strength of the bond, the respective surfaces of the connecting portions may be provided with a certain roughness or any other, particularly three-dimensional structure.

There are basically two ways of building the annular space. The annular space may be built by a cross-sectionally widened collar-like portion of a first or second profile, whereby a respective adjacently disposed profile at least partially engages in the collar-like portion. Since the collar-like portion has a greater cross-section than the engaging profile the annular space is accordingly provided between the inner diameter of the collar-like portion and the outer diameter of the respective engaging profile. Likewise, the collar-like portion may be perceived as a bulge or winged flange in which the cured material may be easily filled. Additionally, possible hollow spaces in the inside of the respective profiles may also be filled with the cured material.

Alternatively, the annular space may be built by a cross-sectionally tapered portion of a first or second profile, whereby a respective adjacently disposed profile at least partially encompasses the tapered portion. In this case, the annular space extends in the inside of the respective profiles of the jacket structure, that is it radially extends between the respective inner diameter and the tapered outer diameter of the respective connecting portions of the adjacently disposed profiles. Likewise, only the annular space may be filled with the cured material or additionally, hollow spaces of the respective profiles may be filled with the cured material as well.

The connecting portions are provided with flange-like portions, whereby the flange-like portions comprise at least one bore for accommodating connecting means, particularly bolts. In such a manner, respective aligned profiles may be connected by means of the bolts, particularly long bolts since the bolts may not only penetrate through respective bores of directly abutting profiles, but may also extend through the entire length of a number of profiles, so that one bolt may firmly hold more than two aligned profiles together. The bores and bolts may be provided with corresponding threads. The flange-like portions may extend in radial inward or outward direction.

Since the cured material contributes to the mechanical properties of the respective profile, it is possible that the filled portions of the first and/or second profiles have a reduced wall thickness in comparision to the non-filled portions of the first and/or second profiles. Hence, the mechanical properties of the respective profiles are not lowered although the profiles comprise a reduction of wall thickness since the cured material serves as a mechanical stabilitsation of the respective profiles.

Favourably, the cured material is a curable cement-based material, particularly mortar or concrete. Cement-based materials are easy to handle and transport and therefore may be easily filled into the respective hollow spaces of the profiles. Curing or hardening of cement-based materials is a well-known and controllable process so that hardening is achievable with a high degree of reproduction. All types of cement-based materials or cements may be used. Further, it is of advantage, that the cured cement-based materials do not encounter any corrosive reactions with the highly corrosive conditions of the sea. Generally, other materials such as filled- or non-filled polymeric resins for instance may be applicable as well.

If is thinkable, that the cured material comprises reinforcement materials, particularly metal rods or metal rebars. In such a manner, particularly plain or deformed steel bars, steel wires and/or steel fabric or mesh may improve the mechanical behaviour of the cured material particularly regarding its tension strength. The named metal components may comprise a defined coating or may be galvanised in order to increase their corrosion resistance. Of course other metals than iron-based metals are also applicable.

Aside, the invention relates to a wind turbine comprising a jacket structure as described above.

In the following the invention is described in detail as reference is made to the figures, whereby:
- Fig. 1: shows a cut-out view of an inventive jacket structure according to a first exemplary embodiment of the invention;
- Fig. 2: shows the detail of fig. 1;
- Fig. 3: shows a cut-out view of an inventive jacket structure according to a second exemplary embodiment of the invention;
- Fig. 4: shows a cut-out view of an inventive jacket structure according to a third exemplary embodiment of the invention;
- Fig. 5: shows a cut-out view of an inventive jacket structure according to a fourth exemplary embodiment of the invention;
- Fig. 6: shows a cut-out view of an inventive jacket structure according to a fifth exemplary embodiment of the invention; and
- Fig. 7: shows a cut-out view of an inventive jacket structure according to a sixth exemplary embodiment of the invention.

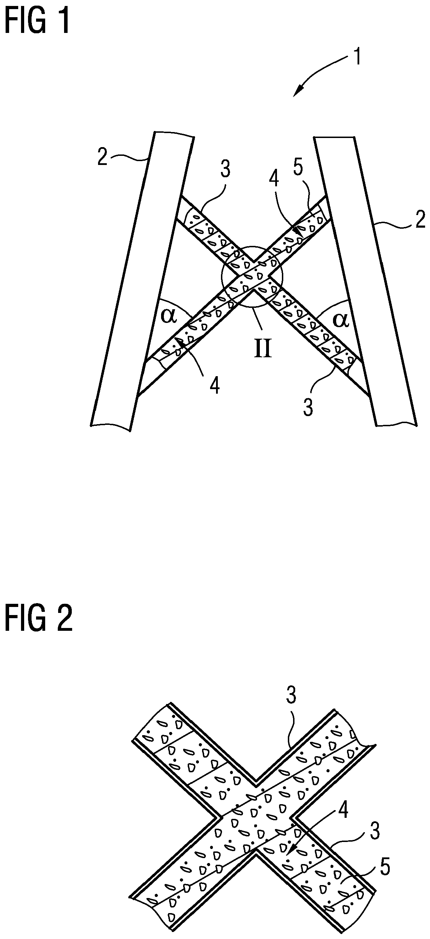

Fig. 1 shows a cut-out view of an inventive jacket structure 1 according to a first exemplary embodiment of the invention. The jacket structure 1 is preferably used as a foundation structure for an offshore wind turbine and essentially comprises a number of axially extending first profiles 2 and a number of second profiles 3 extending in an angle α relative to the first profiles 2. The first and second profiles 2, 3 are preferably made of a stainless steel material.

According to the embodiment shown in the figures 1, 2 the second profiles 3 are built as hollow or tube-like pieces, that is they define a hollow space 4 within their inside. In order to increase the mechanical properties of the second profiles 3, particularly in buckling sensitive areas, the hollow spaces 4 are filled or grouted with a cured cement-based material 5, that is mortar or concrete for instance. As is discernible, the hollow spaces 4 may communicate with each other so that the cement-based material 5 is filled within all second profiles 3 building a cross.

Filling of the hollow spaces 4 of the second profiles 3 results in a number of advantages since it improves the mechanical strength of the respective second profiles 3 and consequently, the jacket structure 1 as a whole. Further, wall thickness can be reduced in the respective filled portions of the second profiles 3 since the cement-based material 5 contributes to the mechanical properties of the respective second profiles 3. Hence, the material use may be reduced which contributes to a cost-effective, yet mechanically stable constructive design of the jacket structure 1.

Likewise, the undesired and dangerous superposition of eigen frequencies or vibrations propagating from other parts of the wind turbine like the rotor blades (not shown) for instance to the jacket structure 1 may be avoided or at least reduced. Moreover, the cement-based material 5 may serve as a certain corrosion protection since cement-based materials do not encounter any corrosive attacks.

Of course, one or more first profiles 2 could be filled with a cement-based material 5 in the same manner if they are provided as hollow or tube-like pieces which will be shown later.

As a result, by providing the jacket structure 1 with hollow first or second profiles 2, 3 a tailor-made mechanical behaviour of the jacket structure 1 is achievable, since particularly highly loaded components or areas of the jacket structure 1 may be proactively and directedly filled or grouted with a mechanical reinforcement, that is the cement-based material 5. Thereby, the cured cement-based material 5 is inventively considered as a construction element directly from the beginning of the planning of the jacket structure 1 and thus, represents an essential component of the jacket structure 1 particularly regarding its mechanical behaviour.

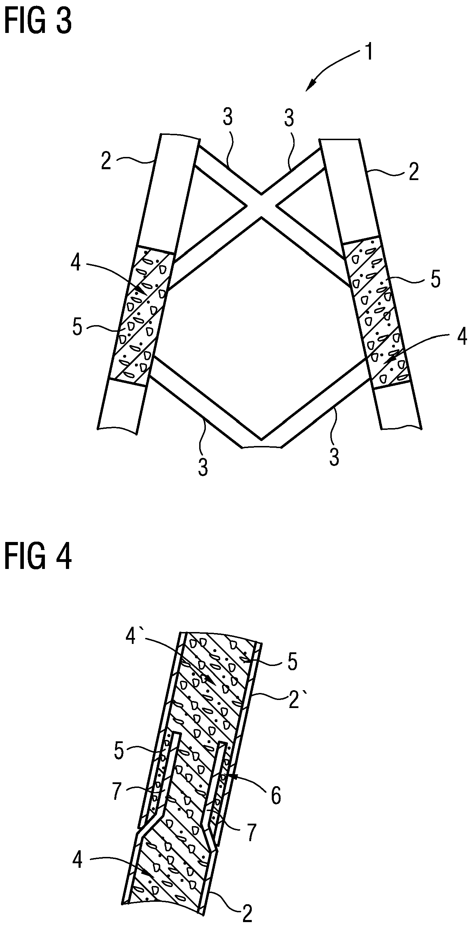

Fig. 3 shows a cut-out view of an inventive jacket structure 1 according to a second exemplary embodiment of the invention. In this embodiment the first profiles 2 are partially hollow, that is they define a hollow space 4 filled with the cement-based material 5 in the connecting portions with the second profiles 3, that is the areas of contact between the first profiles 2 and second profiles 3. These portions are known as highly buckling sensitive areas of the jacket structure 1. Hence, these highly loaded portions of the first profiles 2 are stabilised and strengthened due to the filling with the cement-based material 5.

Fig. 4 shows a cut-out view of an inventive jacket structure 1 according to a third exemplary embodiment of the invention. This embodiment relates to another positive aspect of grouting communicating hollow spaces 4 of adjacently disposed profiles such as first profiles 2 for instance regarding fig. 4. The first profiles 2 are provided with connecting portions for connecting with further first profiles 2 at their free endings. The connecting portions may support pre-alignment of the first profiles 2 and may also offer a certain mechanical joint since they provide a plug-connection of the axially abutting first profiles 2 in such a manner that the respective connecting portions at least partially overlap.

As is discernible from fig. 4, an annular space 6 is provided by the respective connecting portions in the region of the overlap. Thereby, the annular space 6 is filled with the cement-based material 5 which leads to a strengthening of the connection of the respective adjacently disposed first profile 2, 2'. The annular space 6 is built between a cross-sectionally tapered portion 7 of the lower first profile 2 and the adjacently disposed upper first profiles 2', which encompasses the tapered portion 7 of the lower first profiles 2. In other words, the respective connecting portions of the first profiles 2, 2' differ in their diameter since the connecting portion of the lower first profile 2 is tapered. It has a reduced cross-section, whereas the connecting portion of the upper first profile 2' has a normal diameter or cross-section, that is the annular space 6 is built between the inner diameter of the connecting portion of the upper first profile 2' and the outer diameter of the connecting portion of the lower first profile 2. Of course, the remainder of the communicating hollow spaces 4, 4' of the first profiles 2, 2' may also be grouted with the cement-based material 5. The same principle is applicable for respective second profiles 3 as well.

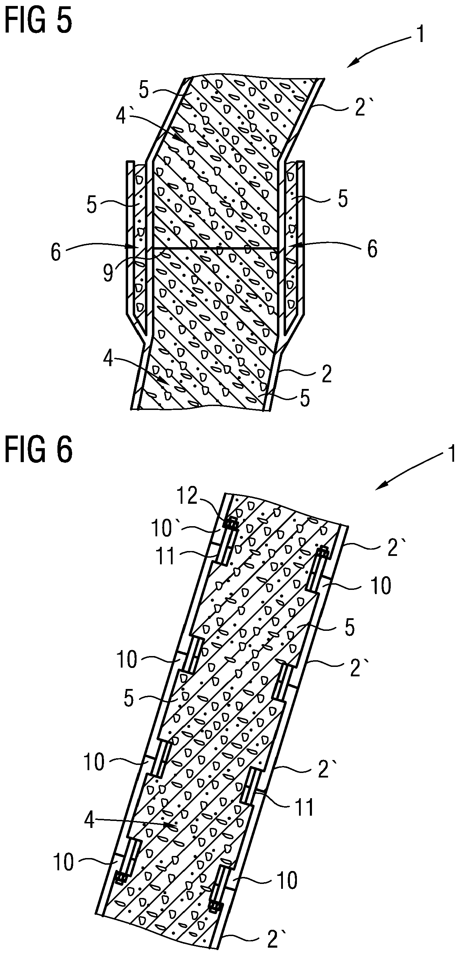

Fig. 5 shows a cut-out view of an inventive jacket structure 1 according to a fourth exemplary embodiment of the invention. The embodiment according to fig. 5 depicts a like principle to the one in fig. 4, whereby the essential difference lies in the location of the annular space 6. According to fig. 5, the annular space 6 is built by a cross-sectionally widened collar-like portion 8 of the lower first profile 2, whereby the adjacently disposed upper first profile 2' at least partially engages in the collar-like portion 8. Likewise, the annular space 6 is filled with the cement-based material 5 so that the first profiles 2, 2' are firmly held in place and relation to each other.

As is further discernible, the hollow spaces 4, 4' of the abutting first profiles 2, 2' do not communicate with each other (indicated by separation line 9). Yet, the respective hollow spaces 4, 4' are completely filled with the cement-based material 5 in each case.

Fig. 6 shows a cut-out view of an inventive jacket structure 1 according to a fifth exemplary embodiment of the invention. In this case, the adjacently disposed first profiles 2 are connected by means of a bolted connection. Therefore, the first profiles 2 are provided with radially inwardly extending flanges 10 each comprising bores, whereby long-bolts 11 penetrate through the bores. As can be seen from fig. 6, one bolt 11 may extend from a flange 10' of an upper first profile 2' to a flange 10 of a lower first profile 2, thereby extending through all flanges of respective profiles in between the upper and lower first profiles 2', 2. Thus, only one bolt 10 may stably connect more than two adjacently disposed first profiles 2. Of course one bolt 11 may also connect only directly abutting first profiles 2. The bolt 11 is fastened by means of appropriate screw nuts 12 or the like. Bores and bolts 11 may be provided with threads.

Again, the communicating hollow spaces 4 of the respective first profiles 2 are filled with the cement-based material 5 in order to increase the strength of the connection of the first profiles 2. Of course, the principle according to the embodiment shown in fig. 6 also applies to second profiles 3.

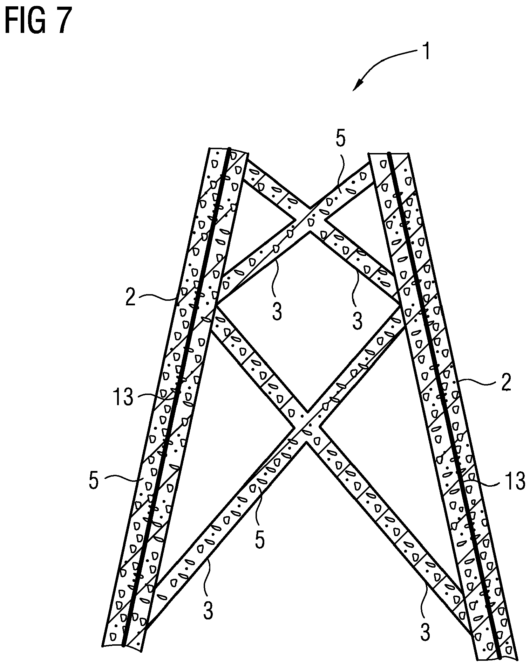

Fig. 7 shows a cut-out view of an inventive jacket structure 1 according to a sixth exemplary embodiment of the invention. The embodiment according to fig. 7 indicates, that all profiles of the jacket structure 1, that is all first profiles 2 and second profiles 3 may be completely filled or grouted with the cement-based material 5. Moreover, regarding the hollow spaces 4 of the first profiles 2, reinforcement means such as metal, that is particularly steel rods or rebars 13 may be provided. The reinforcement means increase the mechanical stability of the cement-based material 5 in particular in regard of tensile forces. The metal reinforcement may comprise different shapes, that is may comprise any kind of shape ranging from simple rods to complex three-dimensional structures such as fabrics or meshes.

The inventive jacket structure 1 may be erected essentially in two different ways. On the one hand, the respective hollow spaces 4 of the first and/or second profiles 2, 3 are filled or grouted with the curable liquid or viscous, particularly cement-based material 5 in a first step. Subsequently, curing or setting of the cement-based material 5 takes place as a second step. In a third step, the first and/or second profiles 2, 3 including the cured cement-based material 5 are placed on the seabed, that is respective foundation piles or the like for instance. Thereon, assembling of the remainder of the jacket structure 1 is performed. According to this embodiment, first and second profiles 2, 3 already containing the cured cement-based material 5 within their inside, that is the respective hollow spaces 4 are assembled to erect the jacket structure 1.

On the other hand, the erection of the jacket structure 1 may be accomplished by initially non-filled first and second profiles 2, 3, that is the respective hollow spaces 4 do not contain any cured or cement-based material 5 while assembling the first and second profiles 2, 3 in a first step. In this embodiment, the second step comprises filling of the respective hollow spaces 4 directly after erection of the jacket structure 1, that is after proper mounting or assembling of the first and second profiles 2, 3, with the curable liquid or viscous material, which cures or sets in a subsequent third step.

Both alternatives relate to the direct assembly process of the jacket structure 1 and merely differ in the point at which the respective hollow spaces 4 of the respective first and/or second profiles 2, 3 are being filled with the curable, particularly cement-based material 5 or at which curing of the curable material takes place. According to the invention, the filling of the hollow spaces 4 of the respective first and/or second profiles 2, 3 with the curable material which is to be cured before or after installation of the respective first and/or second profiles 2, 3 is proactively embedded in the constructive design of the jacket structure 1. Thus, the inventive jacket structure 1 or its manufacturing process distinguishes from any retrofitting or renovation activities.

## Claims

1. Jacket structure (1) for offshore constructions, particularly jacket structure (1) for offshore wind turbines, having a number of axially extending first profiles (2) and a number of second profiles (3) extending in an angle (α) relative to the first profiles (2), whereby at least one first and/or second profile (2, 3) is at least partially hollow, whereby the hollow space (4) of the at least one first and/or second profile (2, 3) is at least partially filled with a cured material, whereby the first and/or second profiles (2,3) are provided with a connecting portion for connecting with at least one further first or second profile (2, 3), whereby the connecting portion is provided at respective free endings of the first and/or second profiles (2, 3), **characterised in that** the connecting portions are provided with flange-like portions (10), whereby the flange-like portions (10) comprise at least one bore for accommodating connecting means, particularly bolts (11).

2. Jacket structure (1) according to claim 1, wherein communicating hollow spaces (4) of at least two adjacently disposed first and/or second profiles (2, 3) are filled with the cured material.

3. Jacket structure (1) according to claim 1 or 2, wherein the first profiles (2) are filled with the cured material in respective connecting portions with second profiles (3).

4. Jacket structure (1) according to one of the preceding claims, wherein the connecting portions of the first and/or second profiles (2, 3) build a plug-connection in such a manner that the respective connecting portions at least partially overlap.

5. Jacket structure (1) according to claim 4, wherein an annular space (6) is provided by the respective connecting portions in the region of the overlap, whereby the annular space (6) is filled with the cured material.

6. Jacket structure (1) according to claim 5, wherein the annular space (6) is built by a cross-sectionally widened collar-like portion (8) of a first or second profile (2, 3), whereby a respective adjacently disposed profile (2, 3) at least partially engages in the collar-like portion (8), or the annular space (6) is built by a cross-sectionally tapered portion (7) of a first or second profile (2, 3), whereby a respective adjacently disposed profile (2, 3) at least partially encompasses the tapered portion (7).

7. Jacket structure (1) according to one of the preceding claims, wherein the filled portions of the of the first and/or second profiles (2, 3) have a reduced wall thickness in comparison to the non-filled portions of the first and/or second profiles (2, 3).

8. Jacket structure (1) according to one of the preceding claims, wherein the cured material is a cement-based material (5), particularly mortar or concrete.

9. Jacket structure (1) according to one of the preceding claims, wherein the cured material comprises reinforcement materials, particularly metal rods or metal rebars (13).

10. Wind turbine comprising a jacket structure (1) according to one of the claims 1 to 9.

## Patentansprüche

1. Mantelstruktur (1) für Offshore-Konstruktionen, insbesondere Mantelstruktur (1) für Offshore-Windenergieanlagen, mit einer Anzahl axial verlaufender erster Profile (2) und einer Anzahl zweiter Profile (3), die in Bezug zu den ersten Profilen (2) in einem Winkel (α) verlaufen, wobei mindestens ein erstes und/oder zweites Profil (2, 3) zumindest teilweise hohl ist, der Hohlraum (4) des mindestens einen ersten und/oder zweiten Profils (2, 3) zumindest teilweise mit einem ausgehärteten Material gefüllt ist, die ersten und/oder die zweiten Profile (2, 3) mit einem Verbindungsabschnitt zum Verbinden mit mindestens einem weiteren ersten oder zweiten Profil (2, 3) versehen sind, sich der Verbindungsabschnitt an jeweiligen freien Enden der ersten und/oder der zweiten Profile (2, 3) befindet, **dadurch gekennzeichnet, dass** die Verbindungsabschnitte mit flanschartigen Abschnitten (10) versehen sind, wobei die flanschartigen Abschnitte (10) mindestens eine Bohrung zum Aufnehmen von Verbindungsmitteln, insbesondere Bolzen (11), umfassen.

2. Mantelstruktur (1) nach Anspruch 1, bei der miteinander verbundene Hohlräume (4) von mindestens zwei nebeneinander angeordneten ersten und/oder zweiten Profilen (2, 3) mit dem ausgehärteten Material gefüllt sind.

3. Mantelstruktur (1) nach Anspruch 1 oder 2, bei der die ersten Profile (2) in jeweiligen Verbindungsabschnitten mit zweiten Profilen (3) mit dem ausgehärteten Material gefüllt sind.

4. Mantelstruktur (1) nach einem der vorhergehenden Ansprüche, bei der die Verbindungsabschnitte der ersten und/oder der zweiten Profile (2, 3) auf eine solche Weise eine Steckverbindung bilden, dass sich die jeweiligen Verbindungsabschnitte zumindest teilweise überlappen.

5. Mantelstruktur (1) nach Anspruch 4, bei der durch die jeweiligen Verbindungsabschnitte in dem Überlappungsbereich ein ringförmiger Raum (6) entsteht, wobei der ringförmige Raum (6) mit dem ausgehärteten Material gefüllt ist.

6. Mantelstruktur (1) nach Anspruch 5, bei der der ringförmige Raum (6) von einem im Querschnitt aufgeweiteten, hülsenartigen Abschnitt (8) eines ersten oder eines zweiten Profils (2, 3) gebildet wird, wobei ein jeweiliges daneben angeordnetes Profil (2, 3) zumindest teilweise in den hülsenartigen Abschnitt (8) eingreift, oder der ringförmige Raum (6) von einem im Querschnitt verjüngten Abschnitt (7) eines ersten oder eines zweiten Profils (2, 3) gebildet wird, wobei ein jeweiliges daneben angeordnetes Profil (2, 3) den verjüngten Abschnitt (7) zumindest teilweise umgibt.

7. Mantelstruktur (1) nach einem der vorhergehenden Ansprüche, bei der die gefüllten Abschnitte der ersten und/oder der zweiten Profile (2, 3) im Vergleich zu den nicht gefüllten Abschnitten der ersten und/oder der zweiten Profile (2, 3) eine geringere Wanddicke aufweisen.

8. Mantelstruktur (1) nach einem der vorhergehenden Ansprüche, bei der es sich bei dem ausgehärteten Material um ein auf Zement basierendes Material (5), insbesondere Mörtel oder Beton, handelt.

9. Mantelstruktur (1) nach einem der vorhergehenden Ansprüche, bei der das ausgehärtete Material Verstärkungsmaterialien, insbesondere Metallstäbe oder Metallbewehrungsstäbe (13), umfasst.

10. Windenergieanlage mit einer Mantelstruktur (1) nach einem der Ansprüche 1 bis 9.

## Revendications

1. Structure de treillis (1) pour constructions en mer, particulièrement structure de treillis (1) pour éoliennes en mer, ayant un nombre de premiers profilés (2) s'étendant axialement et un nombre de deuxièmes profilés (3) s'étendant à un angle (α) par rapport aux premiers profilés (2), dans laquelle au moins un premier et/ou deuxième profilé (2, 3) est au moins partiellement creux, dans laquelle l'espace creux (4) de l'au moins un premier et/ou deuxième profilé (2, 3) est au moins partiellement rempli avec un matériau durci, dans laquelle les premiers et/ou deuxièmes profilés (2, 3) sont dotés d'une partie de connexion pour connexion avec au moins un autre premier ou deuxième profilé (2, 3), dans laquelle la partie de connexion est disposée à des extrémités libres respectives des premiers et/ou deuxièmes profilés (2, 3), **caractérisée en ce que** les parties de connexion sont dotées de parties (10) de type bride, dans laquelle les parties (10) de type bride comprennent au moins un alésage pour recevoir un moyen de connexion, particulièrement des boulons (11).

2. Structure de treillis (1) selon la revendication 1, dans laquelle des espaces creux (4) communiquant d'au moins deux premiers et/ou deuxièmes profilés (2, 3) disposés adjacents sont remplis avec le matériau durci.

3. Structure de treillis (1) selon la revendication 1 ou 2, dans laquelle les premiers profilés (2) sont remplis avec le matériau durci dans des parties de connexion respectives avec des deuxièmes profilés (3).

4. Structure de treillis (1) selon l'une des revendications précédentes, dans laquelle les parties de connexion des premiers et/ou deuxièmes profilés (2, 3) constituent une connexion à fiche de telle manière que les parties de connexion respectives se chevauchent au moins partiellement.

5. Structure de treillis (1) selon la revendication 4, dans laquelle un espace annulaire (6) est créé par les parties de connexion respectives dans la région du chevauchement, dans laquelle l'espace annulaire (6) est rempli avec le matériau durci.

6. Structure de treillis (1) selon la revendication 5, dans laquelle l'espace annulaire (6) est constitué par une partie (8) de type collier élargie en coupe transversale d'un premier ou deuxième profilé (2, 3), dans laquelle un profilé (2, 3) respectif disposé adjacent s'engage au moins partiellement dans la partie (8) de type collier, ou bien l'espace annulaire (6) est constitué par une partie (7) qui s'effile en coupe transversale d'un premier ou deuxième profilé (2, 3), dans laquelle un profilé (2, 3) respectif disposé adjacent comprend au moins partiellement la partie (7) qui s'effile.

7. Structure de treillis (1) selon l'une des revendications précédentes, dans laquelle les parties remplies des premiers et/ou deuxièmes profilés (2, 3) ont une épaisseur de paroi réduite par rapport aux parties non remplies des premiers et/ou deuxièmes profilés (2, 3).

8. Structure de treillis (1) selon l'une des revendications précédentes, dans laquelle le matériau durci est un matériau (5) à base de ciment, particulièrement un mortier ou un béton.

9. Structure de treillis (1) selon l'une des revendications précédentes, dans laquelle le matériau durci comprend des matériaux de renfort, particulièrement des tiges de métal ou des barres de métal (13).

10. Éolienne comprenant une structure de treillis (1) selon l'une des revendications 1 à 9.
